# EUROPEAN PATENT APPLICATION

(11) **EP 2 184 382 A1**
(43) Date of publication of application: **12.05.2010**
(21) Application number: 09174965.5
(22) Date of filing: 03.11.2009
(51) Int. Cl.: C25B 1/04, C25B 15/00

(54) **Hydrogen-oxygen mixed gas generating system**

(30) Priority: 07.11.2008 KR 20080110362
(71) Applicant: Hwang, Boo-Sung, Kyung-ki do (KR)
(72) Inventor: Hwang, Boo-Sung, Kyung-ki do (KR)
(74) Representative: Lang, Christian

(57) **Abstract**

A hydrogen-oxygen mixed gas generating system includes a capture-storage (10) where water is stored and hydrogen-oxygen mixed gas is captured; a electrode plate (20) containing multiple electrodes (21, 22) to electrolyze water; multiple water supplying pipes (30, 30') that provide water from the water capture-storage (10) to the electrode unit (20) by connecting the lower part of the water capture-storage (10) and the electrode plate (30); gas supplying pipes (40, 40') which connect the upper water capture-storage (10) and electrode unit (20) to provide hydrogen-oxygen mixed gas produced from the electrode plate (20) to the upper part of the store water in the water capture-storage (10); in the water capture-storage (10), a endothermic heat radiant system (50) which absorbs and radiates the heat from the water capture-storage (10).

## Description

### Technical Field

This invention is about a hydrogen-oxygen generating system which generates hydrogen-oxygen mixed gas.

### Background

A hydrogen-oxygen mixed-gas generating system is made to produce hydrogen and oxygen from electrolyzed water and to gain a pollution-free energy source with hydrogen-oxygen mixed gas. Water containing a small amount of electrolytes is provided to the storage with positive (+) and negative (-) electrodes and is electrolyzed by direct current to produce this mixture. Hydrogen and oxygen are produced at the ratio of 2:1 and hydrogen is formed as bubbles on the surface of a negative (-) electrode and oxygen in bubbles on the surface of a positive (+) electrode. Produced hydrogen and oxygen can be mixed and combusted and the mixture does not produce any pollutants when ignited, making it an important eco-friendly energy source.

However, during the process of electrolyzing water, a great amount of heat is produced. To cool the heat, a heat-protective system should be implicated; however, it would enlarge and complicate the machine and it will need to include various electric systems such as cooling pan or pumps.

Also, hydrogen-oxygen mixed gas includes oxygen itself so it can be burned without outside oxygen. This suggests that the fire produced at the combustion always have possibility to backfire.

### Content of the Invention

### Problem to Solve

The invention is created to solve the above mentioned problem. By implicating the endothermic radiation system, heat can be radiated without using any electric systems such as cooling pans or pumps, which would simplify the structure and provide a compact mixed gas generating system.

The invention's other goal is to provide a safe hydrogen-oxygen generating system without any possibility of backfiring in combustion.

### The method of solution

To reach the goals, a hydrogen-oxygen mixed gas generating system according to the invention includes water capture-storage where water is stored and hydrogen-oxygen mixed gas is captured, a electrode plate containing multiple electrodes to electrolyze water, multiple water supplying pipes 'that provide water from the water capture-storage to the electrode unit by connecting the lower part of the water capture-storage and the electrode plate, gas supplying pipes which connect the upper water capture-storage and electrode unit to provide hydrogen-oxygen mixed gas produced from the electrode plate to the upper part of the store water in the water capture-storage 10, a endothermic heat radiant system which absorbs and radiates the heat from the water capture-storage in the water capture-storage, and the endothermic heat radiant system includes multiple heat radiant pipes that penetrate the water capture-storage up and down and a heat radiant pin formation contained in the heat radiant pipes to expand the contact area with air.

### Effect

With the hydrogen-oxygen generating system according to the invention heat can be radiated through natural circulation without using any cooling pans or pumps, overall structure can be simplified and further more, it can be materialized in a compact size. Furthermore, by using a reflux preventing filter unit, highly pure mixed gas is produced and backfire is prevented, so that a safer hydrogen-oxygen generating system is created.

### Short explanation of the sketches

Diagram 1 is a sketch to explain the composition of hydrogen-oxygen mixed gas generating system
Diagram 2 is a sketch to explain the endothermic heat radiant system.

### Bernoulli tube

### Modes for carrying out the invention

The explanation below is based on the diagrams attached

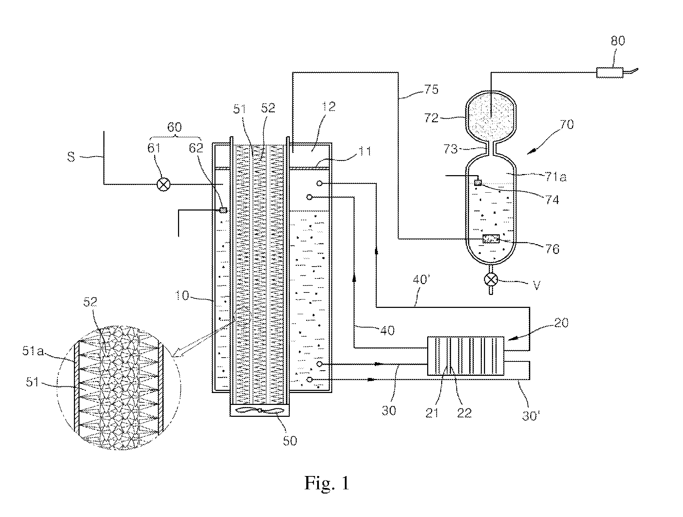

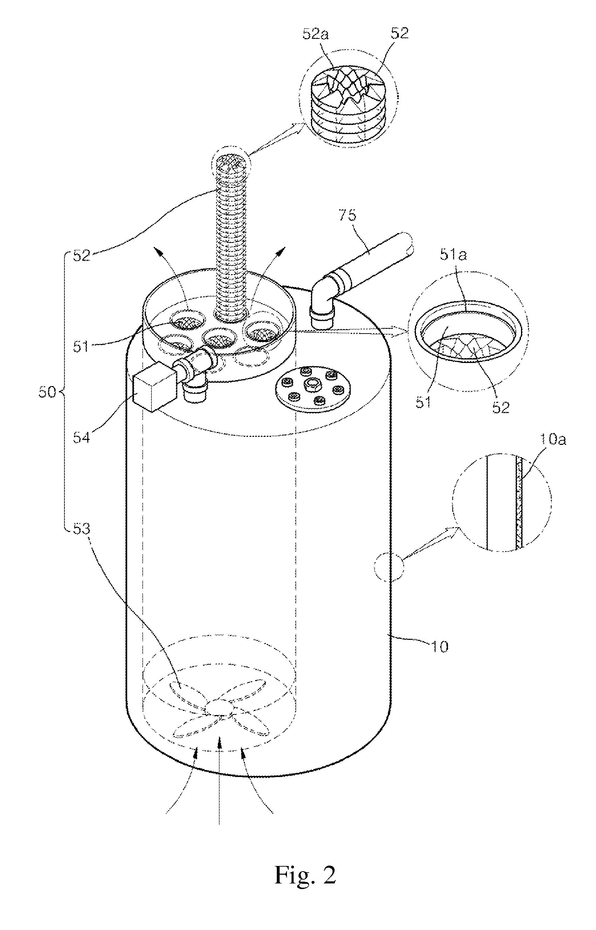

Diagram 1 is a sketch to explain the composition of hydrogen-oxygen mixed gas generating system and the diagram 2 is a sketch to explain the endothermic heat radiant system.

As drawn, the hydrogen-oxygen mixed gas generating system based on the invention contains a water capture-storage 10 where water is stored and hydrogen-oxygen mixed gas is captured, a electrode unit 20 to electrolyze water and multiple electrodes are built-in, multiple water supplying pipes 30, 30' that provide water from the water capture-storage 10 to the electrode unit 20 by connecting the lower part of the water capture-storage 10 and the electrode plate 20, the gas supplying pipes 40, 40' which connect the upper water capture-storage 10 and the electrode unit 20 to provide hydrogen-oxygen mixed gas produced from the electrode plate 20 to the upper part of the stored water in the water capture-storage 10, an endothermic heat radiant system 50 which absorbs and radiates the heat from the water capture-storage 10 in the water capture-storage 10, a water lever balancer 60 connected to the main water supplying pipe S, supplying water from outside, and maintaining the certain height of water stored in the water capture- storage 10, a reflux preventing filter unit 70 which is to prevent hydrogen-oxygen mixed gas inflow from the water capture- storage 10 from flowing back into the water capture-storage 10, and a nozzle 80 connected to the reflux preventing system 70 spraying hydrogen-oxygen mixed gas.

The water capture-storage 10 provides water to the electrode plate 20 and captures the hydrogen-oxygen mixed gas produced from the electrode unit 20 at the same time. The water capture-storage 10 is shaped as a cylinder and is made from a metal with high durability to stand the internal pressure.

Inside the water capture-storage 10 a mixed gas centrifuge 11 is installed to separate the hydrogen-oxygen mixed gas produced from the electrode unit 20 from water, and the capturing device 12 to capture the hydrogen-oxygen mixed gas which can be formed at the upper part of the mixed gas centrifuge 11.

In this case, catalyst, preferably tourmaline catalyst, is applied on the mesh net of the mixed gas centrifuge 11. Tourmaline catalyst is coated on the mesh net or contained during the manufacturing process of the net. The mixed gas centrifuge 11 makes it possible to capture the pure hydrogen-oxygen mixed gas by filtering any debris contained in the elevating hydrogen-oxygen mixed gas produced from - / + electrodes in electrolysis or debris that came in with the water. These rubbles are more effectively eliminated by the catalysis.

For water capture-storage, it is favorable to form thermal conduction on the surface to increase its heat radiance efficiency. The thermal conduction can be formed alone or together by using carbon nano-tube in nanometer size, preferably in 10 to 20 nanometer, and tourmaline catalyst.

The electrode unit's 20 goal is to produce hydrogen and oxygen by electrolyzing water, thereby including multiple negative - and positive + electrodes 21 22 placed in a certain distance from away from each other. These electrodes are polished by nano-technology to electrolyze water effectively and help formed hydrogen-oxygen bubbles to separate easily.

Nano-technology mean polishing - / + electrodes' 21, 22 surface by nano units. Polishing by nano technology would minimize the electrodes' surface friction, making hydrogen or oxygen gas bubbles to separate easily. The technical, thermal, electrical, magnetic, and optical properties change when the size of the matter decreases from bulk to nano meter, making electrolysis on water effortless.

On the surfaces of - /+ electrodes 21, 22, the carbon nano-tube or tourmaline catalyst can be attached. The tourmaline catalyst would be grinded into micro to nanometer powder, burned in 1300 °C and glued to the - + electrodes21, 22. Tourmaline is a mineral under the hexagonal system like crystal. It produces electricity by friction, a massive amount of anions, and lots of hydrogen and oxygen by electrolysis. Tourmaline becomes a catalyst with tiny pores on. It can increase the contact area with electrolyte after being powdered and burned. The tourmaline catalyst can promote the electrolysis of electrolytes when attached on - + electrodes 21, 22.

Water supplying pipes 30, 30' are pipes that provide water from water capture-storage 10 to electrode unit 20 and the gas supplying pipes 40, 40' are pipes that provide hydrogen-oxygen mixed gas formed in the electrode unit 20 to water capture-storage 10.

The endothermic heat radiant system 50 absorbs and radiates the heat from the water capture-storage 10. Multiple heat radiant pipes 51 penetrates the water capture-storage 10 from up and down and the heat radiant pins formation 52 is built inside the pipes 51 to increase the contact surface with air included in the endothermic heat radiant system 50. The heat radiant pan 53 on the upper or the lower part of the heat radiant pipes 51 and the temperature sensor which would signal the heat radiant pan 53 to act when the temperature of water capture-storage 10 is above the certain temperature would be nice if implicated.

The heat radiant pan 51 is composed of multiple small pipes piercing the water capture-storage from all different angles and in the example, seven pipes are used.

The heat radiant pins formation 52 expands the contacting surface area of the heat radiant pipes 51. These formations 52 can be made into various shapes, however, in our example as described in the diagram 2, a thin and long metal twisted is like a screw and forms a multiple irregularities on the metal plate. The thermal conduction plate 51a is preferably formed on the surface of the heat radiant pins formation 52 to increase the heat absorption and radiation. The thermal conduction plate 51a is preferably composed of 10-60 nanometer size of carbon nano tube and tourmaline catalyst.

The heat radiant pan 53 inhales the air and makes it go through the heat radiant pipes.

The temperature sensor 54 signals the heat radiant pan 53 when the temperature of the water capture-storage 10 has elevated to high.

The water level balancer60 connected to the main water supplying pipes S maintains the water level stored in the water capture-storage 10 and can be formed in many different ways. In the example, the water level balancer 60 is composed of solenoid valves connected to the main water supplying pipes S and the water level sensor 62 inside the water capture-storage 10 that would send signals to open the solenoid valves 61 if the water level overrides the certain point. However the water level balancer 60 can be also made in the form of buoy in the toilet.

The reflux preventing filter unit 70 is to make a highly pure mixed gas by eliminating any debris from the hydrogen-oxygen mixed gas flowing from the capturing system 12 through the gas line 75. It also plays a role in preventing the hydrogen-oxygen mixed gas flowing back to the capturing system 12. To establish the goal, the reflux preventing filter unit 70 includes water storage 71 where gas line 75 is connected and water is stored, catalyst storage 72 is located on the upper part of the water storage 71 storing the catalysts, and a Bernoulli tube 73 which connects water storage 71 and catalyst storage 72. The Bernoulli tube comprises wide ends and a thin middle section like an hour glass. The sub-capturing system 71a is formed on the water storage 71 to catch the hydrogen-oxygen mixed gas traveling through the water.

The catalyst storage 72 stores catalysts such as tourmaline catalyst or platinum catalyst. The catalyst storage 72 removes matters in chemical forms by catalysis.

The 1^{st} Bernoulli tube 73 mixes hydrogen gas and oxygen gas that goes through evenly and prevent the mixed gas transferred to the catalyst storage 72 from drawing back to the sub-capturing system 71a. To accomplish these goals, tiny water pipes are placed inside the Bernoulli tube 73, admiringly in a screw form. The diameter of the tiny water pipes is preferably between 0,2 mm to 10 mm.

Actually, the hydrogen gas and oxygen gas in the water storage 71 are partially not mixed. However, as the gases travel through the Bernoulli tube 73, they blend into each other naturally.

The water level sensing device 74 is installed inside the water storage 71. The water level sensing device 74 measures the water used and makes the water tank to provide water to the water storage 71. The water level sensing device 74 can be made in various forms, such as buoy or sensor. Because the water level sensor and the water tank is a technology used in the field, detailed explanation is omitted.

A debris removing filter 76 can also be set up inside the water storage 71. The debris removing filter 76 removes any foreign matters included in the hydrogen-oxygen mixed gas coming through the gas line 75.

According to the reflux preventing filter unit's 70 structure described above, any rubbish included in the hydrogen-oxygen gas flowing through the gas line 75 is removed by debris removing filter 76. The filtered hydrogen-oxygen mixed gas elevates to the sub-capturing system 71a, unable to reflux to the gas line 75. And the mixed gas in the sub-capturing system 71a becomes more evenly blended as it goes through the Bernoulli tube 73, and anything left behind is eliminated as it goes through the catalyst storage 72 becoming highly pure mixed gas.

Hydrogen-oxygen mixed gas generating system's mechanic will be explained according to the structure described above.

According to the structure described above, when hydrogen and oxygen gas bubbles are produced when electrolysis occur between the - electrode 21 and the positive electrode 22 as electric current is put through the electrode unit and the mixed gas flows into the upper part of the water in the water capture-storage 10 with water through the gas providing pipes 40, 40'. Then the internal pressure in the water capture-storage increases and water flows out to the water supplying pipes 30, 30'. This means that without applying structures like pump, water is provided to the electrode unit 20 through water supplying pipes 30, 30' by the pressure of the hydrogen-oxygen mixed gas inflowing from the water capture-storage 10. Afterward, the hydrogen-oxygen mixed gas is gathered in the capturing system 12 through mixed gas centrifuge 11 and the gas in the capturing system 12 is used as combusting gas after going through the gas line 75, the reflux preventing filter unit 70, and the nozzle 80.

Electrolysis in the electrode unit 20 produces a massive amount of heat and the heat is transferred to the water capture-storage 10 through gas supplying pipes 40, 40' elevating the temperature in the water capture-storage 10. Then the temperature of the heat radiant pipe 51 and the heat radiant pins formation 52 of the endothermic heat radiant system 50 are penetrating through the water capture-storage and the temperature of the air inside the endothermic heat radiant system 50 elevates and goes outside the system. This means that natural heat radiation is conducted when the heat from the heat radiant pipe 51 and the heat radiant pins formation 52 is transferred to the water capture-storage which makes the air in the endothermic heat radiant system 50 for making it to go outside.

Also when the temperature of the water capture-storage 10 is elevated beyond the certain point, the heat radiant pan 53 is activated by temperature sensor 54, making immediate cooling possible.

The invention is explained based on the example experimented but keep in mind that this is only one of the possibilities and anyone with sufficient knowledge in the field would understand that variations can be applied.

### <Important symbols on the sketches>

- 10 -: water capture-storage
- 10a -: thermal conduction plate
- 11 -: mixed gas centrifuge
- 12 -: capturing system
- 20 -: electrode unit
- 21, 22 -: electrodes
- 30, 30' -: water supplying pipes
- 40, 40' -: gas supplying pipes
- 50 -: endothermic heat radiant system
- 51 -: heat radiant pipe
- 51a -: thermal conduction plate
- 52 -: heat radiant pins formation
- 53 -: heat radiant pan
- 54 -: temperature sensor
- 60 -: water level balancer
- 61 -: solenoid valve
- 62 -: water level sensor
- 70 -: reflux preventing filter unit
- 71 -: water storage
- 71a -: sub-capturing system
- 72 -: catalyst storage
- 73 -: Bernoulli tube
- 74 -: water level sensing device
- 75 -: gas line
- 76 -: debris removing filter
- 80 -: nozzle

## Claims

1. A hydrogen-oxygen mixed gas generating system comprising:
a water capture-storage (10) where water is stored and hydrogen-oxygen mixed gas is captured;
a electrode plate (20) containing multiple electrodes (21, 22) to electrolyze water;
multiple water supplying pipes (30, 30') that provide water from the water capture-storage (10) to the electrode unit (20) by connecting the lower part of the water capture-storage (10) and the electrode plate (30);
gas supplying pipes (40, 40') which connect the upper water capture-storage (10) and electrode unit (20) to provide hydrogen-oxygen mixed gas produced from the electrode plate (20) to the upper part of the store water in the water capture-storage (10); and
an endothermic heat radiant system (50) which absorbs and radiates the heat from the water capture-storage (10) in the water capture-storage (10),
and the endothermic heat radiant system (50) includes multiple heat radiant pipes (51) that penetrating the water capture-storage (10) up and down and heat radiant pin formation (52) is contained in the heat radiant pipes (51) to expand the contact area with air.

2. The hydrogen-oxygen mixed gas generating system according to claim 1, wherein
the endothermic heat radiant system (50) contains
a heat radiant pan (53) on the upper or the lower part of the heat radiant pipes (51) and a temperature sensor (54) which would signal the heat radiant pan (53) to act when the temperature of water capture-storage (10) is above a certain temperature.

3. The hydrogen-oxygen mixed gas generating system according to claim 1, wherein
a thermal conduction plate is formed on the surface of the heat radiant pins formation (52), of the inside of the water capture-storage (10) and of the inside of the heat radiant pipes (51) to increase the heat absorption and radiation.

4. The hydrogen-oxygen mixed gas generating system according to claim 1, wherein
the hydrogen-oxygen generating system has a thermal conduction plate formed on the surfaces of heat radiant pin formation (53) and of the water capture-storage, or inside the heat radiant pipe (51).

5. The hydrogen-oxygen mixed gas generating system according to claim 1, wherein
the hydrogen-oxygen generating system includes a water level balancer (60) connected to the main water supplying pipes (S) maintains the water level stored in the water capture-storage (10) and can be formed in many different ways.

6. The hydrogen-oxygen mixed gas generating system according to claim 1, wherein the hydrogen-oxygen generating system includes a mixed gas separating filter (11) installed inside the water capture-storage to separate the hydrogen-oxygen mixed gas from the water and the capturing device formed on the upper part of the mixed gas separating filter (11) which captures the hydrogen-oxygen mixed gas passing through the mixed gas separating filter (11).
